# EUROPEAN PATENT APPLICATION

(11) **EP 4 274 185 A1**
(43) Date of publication of application: **08.11.2023**
(21) Application number: 23170736.5
(22) Date of filing: 28.04.2023
(51) Int. Cl.: H04L 47/24, H04L 47/2491, H04W 28/02

(54) **MULTIPLE TAGS HANDLING FOR QOS RULES AND PACKET FILTERS**

(30) Priority: 06.05.2022 US 202263338910 P; 20.04.2023 US 202318137322
(71) Applicant: MediaTek Inc., Hsinchu City 30078 (TW)
(72) Inventor: LIN, Yu-Hsin, 30078 Hsinchu City (TW); LI, Ting-Ying, 30078 Hsinchu City (TW); HSIAO, Chia-Chi, 30078 Hsinchu City (TW); CHEN, I-Feng, 30078 Hsinchu City (TW)
(74) Representative: Hoefer & Partner Patentanwälte mbB

(57) **Abstract**

A method of deriving packet filter component of derived QoS rule and evaluating of packet when there are multiple C-TAGs and/or S-TAGs in Ethernet frame header is proposed. In one novel aspect, for a derived QoS rule, when a DL packet carries multiple C-TAGs or S-TAGs, the UE derives packet filter component of the QoS rule derived from the outermost C-TAG and/or the outermost S-TAG of the DL packet (603). In another novel aspect, when evaluating a data packet carrying multiple C-TAGs or S-TAGs, the UE/NW evaluates the outermost C-TAG and/or the outermost S-TAG of the data packet (604), the UE/NW then send the data packet on the corresponding QoS rule of the matched packet filter (605).

## Description

### CROSS REFERENCE TO RELATED APPLICATIONS

This application claims priority under 35 U.S.C. §119 from U.S. Provisional Application Number 63/338,910, entitled "Multiple TAGs handling for derived or signal QoS Rule/packet filter", filed on May 6, 2022, the subject matter of which is incorporated herein by reference.

### TECHNICAL FIELD

The disclosed embodiments relate generally to wireless communication, and, more particularly, to method of handling multiple TAGs for derived or signaled Quality of Service (QoS) rule or for Traffic Flow Template (TFT) and packet filter in Long-Term Evolution (LTE) system and 5G new radio (NR) systems.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA and Universal Mobile Telecommunication System (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. With the optimization of the network design, many improvements have developed over the evolution of various standards. The Next Generation Mobile Network (NGMN) board, has decided to focus the future NGMN activities on defining the end-to-end requirements for 5G new radio (NR) systems.

Quality of Service (QoS) indicates the performance from the perspective of network users. In LTE Evolved Packet System (EPS), QoS is managed based on EPS bearer in the Evolved Packet Core (EPC) and the Radio Access Network (RAN). In 5G network, QoS flow is the finest granularity for QoS management to enable more flexible QoS control. The concept of QoS flow is like EPS bearer. All types of traffic mapped to the same LTE EPS bearer or to the same 5G QoS flow receive the same level of packet forwarding treatment (e.g., scheduling policy, queue management policy, rate shaping policy, RLC configuration etc.) Providing different QoS forwarding treatment requires separate 5G QoS flow. Each QoS flow may include multiple QoS rules consisting of QoS profile, packet filters, and precedence order. QoS profile includes QoS parameters and QoS marking. Packet filter is used for binding a QoS flow to a specific QoS marking. Precedence order represents the priority to adapt a QoS rule to a QoS flow. UE performs the classification and marking of uplink (UL) User Plane traffic, i.e., the association of UL traffic to QoS flows based on QoS rules.

In 5G, PDU session establishment is a parallel procedure of PDN connection procedure in 4G. A PDU session defines the association between the UE and the data network that provides a PDU connectivity service. Each PDU session is identified by a PDU session ID, and may include multiple QoS flows and QoS rules. Each QoS flow is identified by a QoS flow ID (QFI) which is unique within a PDU session. Each QoS rule is identified by a QoS rule ID (QRI). There can be more than one QoS rule associated with the same QoS flow. A default QoS rule is required to be sent to the UE for every PDU session establishment and it is associated with a QoS flow. Within a PDU session, there should be one and only one default QoS rule.

In the current 5G non-access stratum (NAS) specification, QoS rule and packet filters can be created, modified, and deleted using NAS signaling for QoS operation via PDU session and PDN connection establishment, modification, and release procedures, this is referred to as signaled QoS rule. In addition, QoS rule and packet filters can be derived from downlink (DL) packet with Reflective QoS Indication (RQI), a field in service data adaptation protocol (SDAP) header. This is referred to as derived QoS rule. For each received DL SDAP data PDU with RQI set to 1, the SDAP entity shall inform the NAS layer of the RQI and QFI. If the UE receives a DL user data packet marked with a QFI and an RQI, the DL user data packet belongs to a PDU session of IPv4, IPv6, IPv4v6 or Ethernet PDU session type, and the UE does not have a derived QoS rule with the same packet filter for UL direction as the packet filter for UL direction derived from the DL user data packet, then the UE shall create a new derived QoS rule and packet filter.

When there are multiple C-TAGs and/or S-TAGs in the ethernet frame header of the DL packet, it is unclear which C-TAGs and/or S-TAGs should be derived for the derived QoS Rule in DL packet with RQI. Furthermore, it is unclear which C-TAGs and/or S-TAGs should be evaluated for the signalled or derived QoS Rule or packet filter when there are multiple C-TAGs and/or S-TAGs in the ethernet frame header of an UL/DL data packet.

A solution is sought.

### SUMMARY

A method of deriving packet filter component of derived QoS rule and evaluating of packet when there are multiple C-TAGs and/or S-TAGs in Ethernet frame header is proposed. In one novel aspect, for a derived QoS rule, when a DL packet carries multiple C-TAGs or S-TAGs, the UE derives packet filter component of the QoS rule derived from the outermost C-TAG and/or the outermost S-TAG of the DL packet. In another novel aspect, when evaluating an UL data packet carrying multiple C-TAGs or S-TAGs, the UE evaluates the outermost C-TAG and/or the outermost S-TAG of the UL data packet, the UE then send the UL data packet on the corresponding QoS rule of the matched packet filter. When evaluating a DL data packet carrying multiple C-TAGs or S-TAGs, the network evaluates the outermost C-TAG and/or the outermost S-TAG of the DL data packet, the network then send the DL data packet on the corresponding QoS rule of the matched packet filter. Methods according to the invention are defined in the independent claims. The dependent claims define preferred embodiments thereof.

In one embodiment, a UE establishes a protocol data unit (PDU) session in a 5G mobile communication network. The UE receives a downlink (DL) data packet comprising a QoS flow ID (QFI), a reflective QoS indicator (RQI), and multiple C-TAGs or S-TAGs. The UE derives a packet filter component from the multiple C-TAGs or S-TAGs, wherein the packet filter component is derived from an outmost C-TAG or S-TAG. The UE evaluates a packet header of an uplink data packet and find a matching packet filter of a QoS rule of the packet header. The UE transmits the uplink data packet using the matched QoS rule.

In another embodiment, a UE establishes a protocol data unit (PDU) session or a Packet data network (PDN) connection in a mobile communication network. The UE obtains QoS rule configuration for the PDU session or the PDN connection, wherein the QoS rule configuration comprises a number of packet filters having packet filter components. The UE evaluates a header of an uplink data packet that carries multiple C-TAGs or S-TAGs, wherein the UE evaluates an outmost C-TAG or S-TAG of the uplink data packet based on the QoS rule configuration. The UE transmits the uplink data packet using the matched QoS rule.

In yet another embodiment, a network entity establishes a protocol data unit (PDU) session or a Packet data network (PDN) connection with a user equipment (UE) by a network entity. The network entity obtains QoS rule configuration for the PDU session or the PDN connection, wherein the QoS rule configuration comprises a number of packet filters having packet filter components. The network entity evaluates a header of a downlink data packet that carries multiple C-TAGs or S-TAGs, wherein the network entity evaluates an outmost C-TAG or S-TAG of the downlink data packet based on the QoS rule configuration. The network entity transmits the downlink data packet to the UE using the matched QoS rule.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary EPS/5GS network supporting Quality of Service (QoS) rule management, derivation of packet filter component of derived QoS rule, and evaluation of packet, when there are multiple C-TAGs and/or S-TAGs in Ethernet frame header, in accordance with one novel aspect.
Figure 2 illustrates simplified block diagrams of a user equipment (UE) in accordance with embodiments of the current invention.
Figure 3 illustrates an example of a packet header with SDAP header, an Ethernet frame, and multiple TPIDs of C-TAGs and S-TAGs.
Figure 4 illustrates a first embodiment of derivation of packet filter component of derived QoS rule and evaluation of uplink packet from UE perspective in accordance with one novel aspect.
Figure 5 illustrates a second embodiment of evaluation of downlink packet from NW perspective in accordance with one novel aspect.
Figure 6 is a flow chart of a method of derivation of packet filter component of derived QoS rule from UE perspective in accordance with one novel aspect.
Figure 7 is a flow chart of a method of evaluation of uplink packet from UE perspective in accordance with one novel aspect.
Figure 8 is a flow chart of a method of evaluation of downlink packet from NW perspective in accordance with one novel aspect.

### DETAILED DESCRIPTION

Reference will now be made in detail to some embodiments of the invention, examples of which are illustrated in the accompanying drawings.

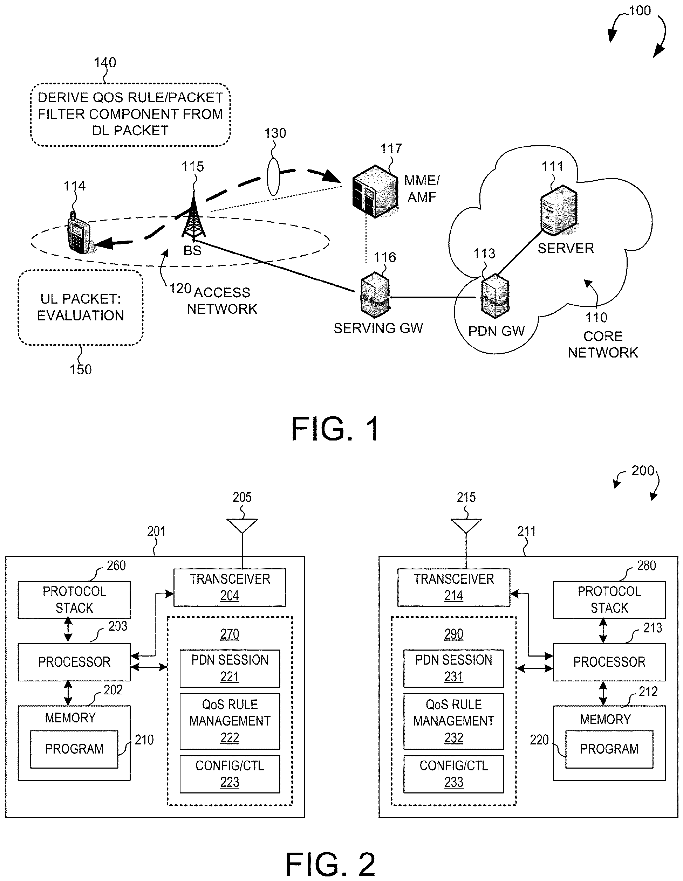

Figure 1 illustrates an exemplary EPS/5GS network 100 supporting Traffic Flow Template (TFT)/Quality of Service (QoS) rule management, derivation of packet filter component of derived QoS rule, and evaluation of packet, when there are multiple C-TAGs and/or S-TAGs in Ethernet frame header, in accordance with one novel aspect. LTE/NR network 100 comprises application server 111 that provides various services by communicating with a plurality of user equipments (UEs) including UE 114. In the example of Figure 1, application server 111 and a packet data network gateway (PDN GW or P-GW) 113 belong to part of a core network CN 110. UE 114 and its serving base station BS/gNB 115 belong to part of a radio access network RAN 120. RAN 120 provides radio access for UE 114 via a radio access technology (RAT). Application server 111 communicates with UE 114 through PDN GW 113, serving GW 116, and BS/gNB 115. A mobility management entity (MME) or an access and mobility management function (AMF) 117 communicates with BS/gNB 115, serving GW 116 and PDN GW 113 for access and mobility management of wireless access devices in LTE/NR network 100. UE 114 may be equipped with a radio frequency (RF) transceiver or multiple RF transceivers for different application services via different RATs/CNs. UE 114 may be a smart phone, a wearable device, an Internet of Things (IoT) device, and a tablet, etc.

EPS and 5GS networks are packet-switched (PS) Internet Protocol (IP) networks. This means that the networks deliver all data traffic in IP packets, and provide users with IP Connectivity. When UE joins an EPS/5GS network, a Packet Data Network (PDN) address (i.e., the one that can be used on the PDN) is assigned to the UE for its connection to the PDN. EPS calls the UE's "IP access connection" an evolved packet system (EPS) bearer, which is a connection between the UE and the P-GW. The P-GW is the default gateway for the UE's IP access. EPS has defined a Default EPS Bearer to provide the IP Connectivity.

In 5G, PDU session establishment is a parallel procedure of PDN connection procedure in 4G. A PDU session defines the association between the UE and the data network that provides a PDU connectivity service. Each PDU session is identified by a PDU session ID, and may include multiple QoS flows and QoS rules. Each QoS flow is identified by a QoS flow ID (QFI) which is unique within a PDU session. Each QoS rule is identified by a QoS rule ID (QRI). There can be more than one QoS rule associated with the same QoS flow. A default QoS rule is required to be sent to the UE for every PDU session establishment and it is associated with a QoS flow. Within a PDU session, there should be one and only one default QoS rule.

In the current 5G non-access stratum (NAS) specification, QoS rule and packet filters can be created, modified, and deleted using NAS signaling for QoS operation via PDU session and PDN connection establishment, modification, and release procedures, this is referred to as signaled QoS rule. In addition, QoS rule and packet filters can be derived from downlink (DL) packet with Reflective QoS Indication (RQI), a field in service data adaptation protocol (SDAP) header. This is referred to as derived QoS rule. For each received DL SDAP data PDU with RQI set to 1, the SDAP entity shall inform the NAS layer of the RQI and QFI. If the UE receives a DL user data packet marked with a QFI and an RQI, the DL user data packet belongs to a PDU session of IPv4, IPv6, IPv4v6 or Ethernet PDU session type, and the UE does not have a derived QoS rule with the same packet filter for UL direction as the packet filter for UL direction derived from the DL user data packet, then the UE shall create a new derived QoS rule and packet filter.

When there are multiple C-TAGs and/or S-TAGs in the ethernet frame header of the DL packet, it is unclear which C-TAGs and/or S-TAGs should be derived for the derived QoS Rule in DL packet with RQI. Furthermore, it is unclear which C-TAGs and/or S-TAGs should be evaluated for the signalled or derived QoS Rule or packet filter when there are multiple C-TAGs and/or S-TAGs in the ethernet frame header of an UL/DL data packet. In accordance with one novel aspect, a method of deriving packet filter component of derived QoS rule and evaluating packet when there are multiple C-TAGs and/or S-TAGs in Ethernet frame header is proposed. In one novel aspect as depicted by 140, for a derived QoS rule, when a DL packet carries multiple C-TAGs or S-TAGs, the UE derives packet filter component of the QoS rule derived from the outermost C-TAG and/or the outermost S-TAG of the DL packet. In another novel aspect as depicted by 150, when evaluating an UL data packet carrying multiple C-TAGs or S-TAGs, the UE evaluates the outermost C-TAG and/or the outermost S-TAG of the UL data packet, the UE then send the UL data packet on the corresponding QOS rule of the matched packet filter. When evaluating a DL data packet carrying multiple C-TAGs or S-TAGs, the network evaluates the outermost C-TAG and/or the outermost S-TAG of the DL data packet, the network then send the DL data packet on the corresponding QOS rule of the matched packet filter.

Figure 2 illustrates simplified block diagrams of wireless devices, e.g., a UE 201 and network entity 211 in accordance with embodiments of the current invention. Network entity 211 may be a base station combined with an MME or AMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes a set of control functional modules and circuit 290. PDU session handling circuit 231 handles PDU session establishment and modification procedures. QoS flow and rule management circuit 232 creates, modifies, and deletes QoS flows and QoS rules for UE. Configuration and control circuit 233 provides different parameters to configure and control UE.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuits to carry out functional tasks of UE 201. Protocol stacks 260 comprise Non-Access-Stratum (NAS) layer to communicate with an MME or an AMF entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network. In one example, system modules and circuits 270 comprise PDU session handling circuit 221 that performs PDU session establishment and modification procedures with the network, a QoS rule management circuit 222 that handles QoS rule management by creating, modifying, deleting QoS rules and packet filters, a config and control circuit 223 that handles QoS flow and rule configuration and other control parameters, and evaluates data packets.

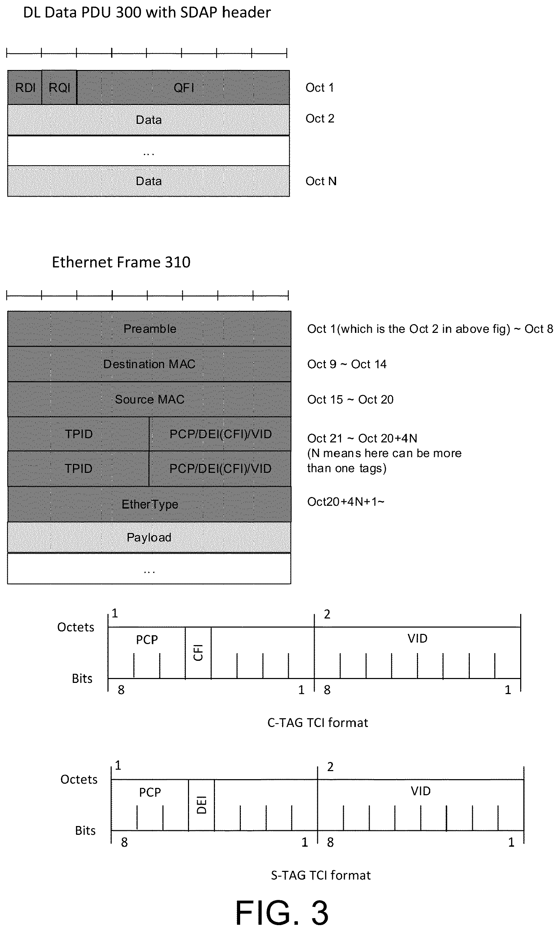

Figure 3 illustrates an example of a downlink (DL) data PDU with SDAP header, an Ethernet frame, and multiple TPIDs of C-TAGs and S-TAGs. The DL data PDU 300 comprises a Reflective QoS Indication (RQI), a field in service data adaptation protocol (SDAP) header. For each received DL SDAP data PDU with RQI set to 1, the SDAP entity shall inform the NAS layer of the RQI and QFI. The Ethernet Frame 310 is included in the Data field of the DL data PDU 300. The Ethernet Frame 310 comprises multiple TPIDs (Tag Protocol Identifications), e.g., the TPID of the C-TAG is 0x8100, and the TPID of the S-TAG is 0x88a8. The multiple TPIDs occupies Oct 21 ~ Oct20+4N. Figure 3 also illustrates an example of the C-TAG TCI format, as well as the S-TAG TCI format. There can be multiple C-TAG or S-TAG, i.e., N>1.

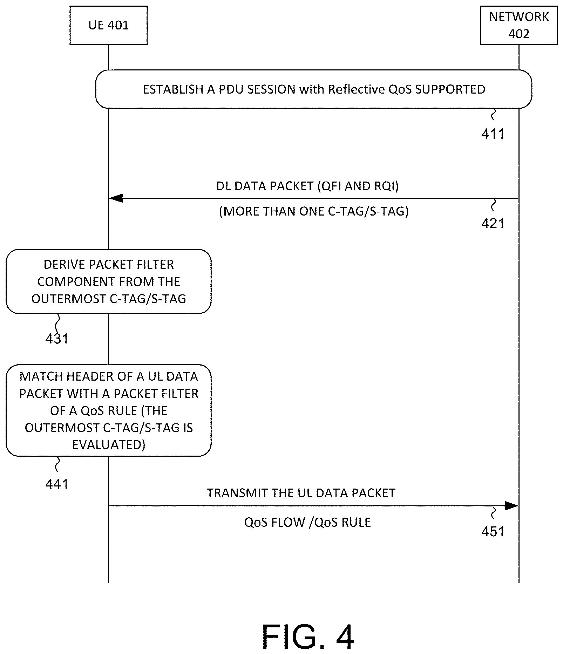

Figure 4 illustrates a first embodiment of derivation of packet filter component of derived QoS rule and evaluation of uplink packet from UE perspective in accordance with one novel aspect. In step 411, UE 401 and network 402 establish a PDU session via a PDU session establishment procedure. The PDU session may be established to comprise one or more QoS rules, including one default QoS rule. Network and UE support reflective QoS for the PDU session. In step 421, UE 401 receives a downlink data packet with RQI set to 1, a field in service data adaptation protocol (SDAP) header of the DL data packet. This is referred to as derived QoS rule. The DL data packet includes more than one C-TAG and/or S-TAG. In step 431, UE 401 derives a new QoS rule and corresponding packet filter components of the derived QoS rule. In one novel aspect, there are multiple C-TAG and/or S-TAG, and UE 401 derives the packet filter component from the outmost C-TAG and the outmost S-TAG. In step 441, UE 401 applies evaluation on an uplink data packet. The UE attempts to match header of the packet with packet filter of the QoS rule. If there are more than one C-TAG/S-TAG in the Ethernet frame header of the UL data packet, then the outmost C-TAG/S-TAG is evaluated. In step 451, UE 401 will transmit the UL data packet on the corresponding QoS flow of the QoS rule if a match is found.

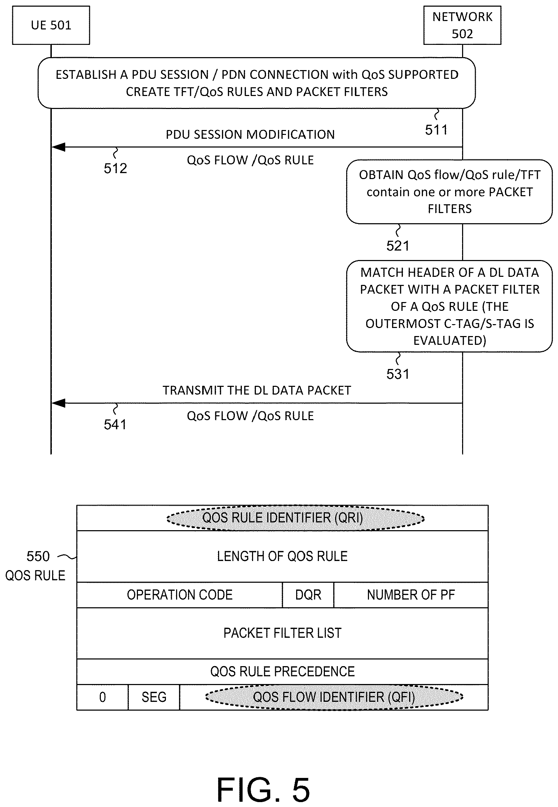

Figure 5 illustrates a second embodiment of evaluation of downlink packet from NW perspective in accordance with one novel aspect. In step 511, UE 501 and network 502 establish a PDU session via a PDU session establishment procedure (in 5G), or establishes a PDN connection via a PDN connectivity procedure (in 4G). In 5G, each PDU session is identified by a PDU session ID, and may include multiple QoS flows and QoS rules. In 4G, each PDN connection has one or more EPS bearers, each EPS bearer is configured with a Traffic Flow Template (TFT), which corresponds to a QoS rule of a PDU session. The PDU session or PDN connection may be established to comprise one Traffic Flow Template (TFT)/ or one or more QoS rules, including one default QoS rule. The TFT and QoS rules and packet filters may be created, modified, or deleted later on via NAS signaling (Signaled QoS rule). For example, in step 512, network 502 sends a PDU session modification command message to UE 501. The command message is for UE to perform certain QoS operations for the PDU session, for example, to modify an existing QoS rule and create/delete packet filters. This is referred to as signaled QoS rule. In one example, the network can provide a QoS rule IE to the UE, which comprises a list of QoS rules. Each QoS rule, as depicted by 550 of Figure 5, comprises a QoS rule identifier (QRI), a length of the QoS rule, a rule operation code, a default QoS rule (DQR) bit, a number of packet filters, a packet filter list, a QoS rule precedence, and a QoS flow identifier (QFI). Since QFI identifies a corresponding QoS flow, the QoS rule having the specific QFI is thus associated with the QoS flow through the same specific QFI.

In step 521, a network entity (e.g., UPF) obtains QoS rule and QoS flow parameters of the UE, which contain one or more packet filters. In step 531, the network entity (UPF) attempts to match header of a downlink data packet with packet filter of a QoS rule. If there are more than one C-TAG/S-TAG in the Ethernet frame header of the DL data packet, then the outmost C-TAG/S-TAG is evaluated. In step 541, the network entity (UPF) will transmit the DL data packet on the corresponding QoS flow of the QoS rule if a match is found.

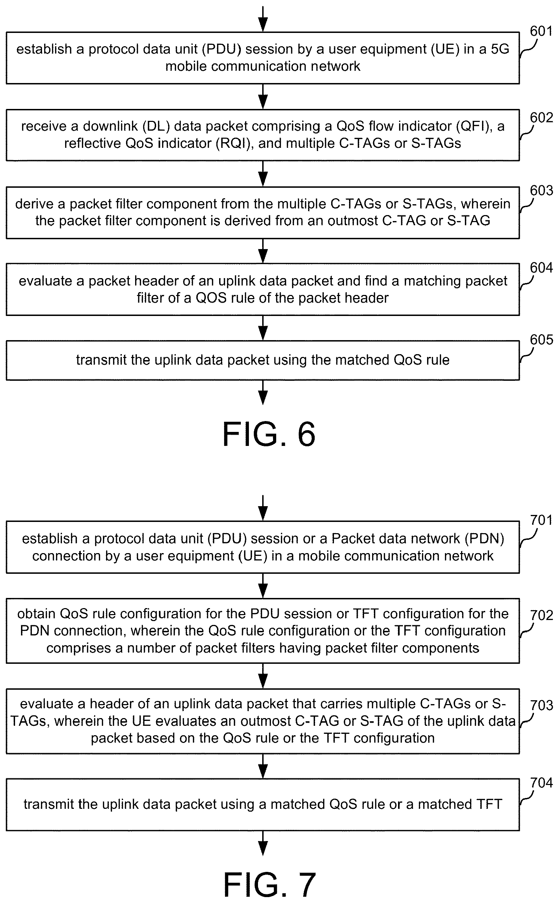

Figure 6 is a flow chart of a method of derivation of packet filter component of derived QoS rule from UE perspective in accordance with one novel aspect. In step 601, a UE establishes a protocol data unit (PDU) session in a 5G mobile communication network. In step 602, the UE receives a downlink (DL) data packet comprising a QoS flow ID (QFI), a reflective QoS indicator (RQI), and multiple C-TAGs or S-TAGs. In step 603, the UE derives a packet filter component from the multiple C-TAGs or S-TAGs, wherein the packet filter component is derived from an outmost C-TAG or S-TAG. In step 604, the UE evaluates a packet header of an uplink data packet and find a matching packet filter of a QoS rule of the packet header. In step 605, the UE transmits the uplink data packet using the matched QoS rule.

Figure 7 is a flow chart of a method of evaluation of uplink packet from UE perspective in accordance with one novel aspect. In step 701, a UE establishes a protocol data unit (PDU) session or a Packet data network (PDN) connection in a mobile communication network. In step 702, the UE obtains TFT/QoS rule configuration for the PDU session or the PDN connection, wherein the TFT or the QoS rule configuration comprises a number of packet filters having packet filter components. In step 703, the UE evaluates a header of an uplink data packet that carries multiple C-TAGs or S-TAGs, wherein the UE evaluates an outmost C-TAG or S-TAG of the uplink data packet based on the TFT/QoS rule configuration. In step 704, the UE transmits the uplink data packet using the matched TFT/QoS rule.

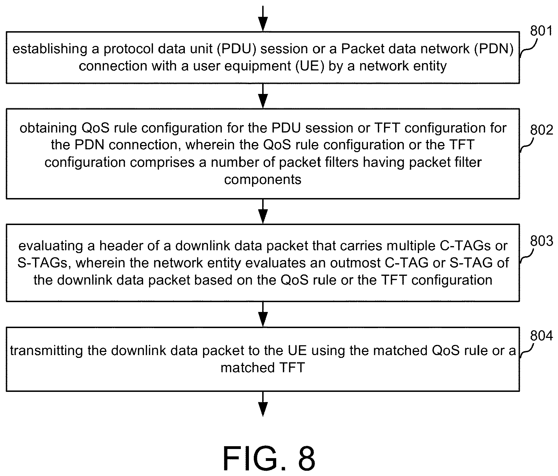

Figure 8 is a flow chart of a method of evaluation of downlink packet from NW perspective in accordance with one novel aspect. In step 801, a network entity establishes a protocol data unit (PDU) session or a Packet data network (PDN) connection with a user equipment (UE) by a network entity. In step 802, the network entity obtains TFT/QoS rule configuration for the PDU session or the PDN connection, wherein the TFT/QoS rule configuration comprises a number of packet filters having packet filter components. In step 803, the network entity evaluates a header of a downlink data packet that carries multiple C-TAGs or S-TAGs, wherein the network entity evaluates an outmost C-TAG or S-TAG of the downlink data packet based on the TFT/QoS rule configuration. In step 804, the network entity transmits the downlink data packet to the UE using the matched TFT/QoS rule.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
establishing a protocol data unit, in the following also referred to as PDU, session by a user equipment, in the following also referred to as UE, in a 5G mobile communication network (601);
receiving a downlink, in the following also referred to as DL, data packet comprising a QoS flow ID, in the following also referred to as QFI, a reflective QoS indicator, in the following also referred to as RQI, and multiple C-TAGs or S-TAGs (602);
deriving a packet filter component from the multiple C-TAGs or S-TAGs, wherein the packet filter component is derived from an outmost C-TAG or S-TAG (603);
evaluating a packet header of an uplink data packet and find a matching packet filter of a QoS rule of the packet header (604); and
transmitting the uplink data packet using the matched QoS rule (605).

2. The method of Claim 1, wherein the DL data packet is a PDU comprising a header portion and data portion, and wherein the data portion further comprises an Ethernet Frame header.

3. The method of Claim 2, wherein the header portion comprises a service data adaptation protocol, in the following also referred to as SDAP, header, and the SDAP header further comprise the RQI and the QFI.

4. The method of Claim 2 or 3, wherein the Ethernet Frame header comprises one or more TAG Protocol Identification, in the following also referred to as TPID, fields.

5. The method of Claim 4, wherein the one or more TPID fields carries multiple C-TAGs or S-TAGs in the Ethernet Frame header.

6. The method of any one of Claims 1 to 5, wherein the deriving of the packet filter component involves creating the packet filter component from a value of the outmost C-TAG or S-TAG.

7. The method of any one of Claims 1 to 6, wherein the evaluating of the packet header of the uplink data packet involves finding a packet filter from QoS rules that matches with a packet filter of the uplink data packet.

8. The method of any one of Claims 1 to 7, wherein the packet header of the uplink data packet carries multiple C-TAG or S-TAG, and wherein the UE evaluates the outmost C-TAG or S-TAG of the uplink data packet.

9. A method, comprising:
establishing a protocol data unit, in the following also referred to as PDU, session or a Packet data network, in the following also referred to as PDN, connection by a user equipment, in the following also referred to as UE, in a mobile communication network (701);
obtaining QoS rule configuration for the PDU session or Traffic Flow Template, in the following also referred to as TFT, configuration for the PDN connection, wherein the QoS rule configuration or the TFT configuration comprises a number of packet filters having packet filter components (702) ;
evaluating a header of an uplink data packet that carries multiple C-TAGs or S-TAGs, wherein the UE evaluates an outmost C-TAG or S-TAG of the uplink data packet based on the QoS rule or the TFT configuration (703); and
transmitting the uplink data packet using a matched QoS rule or a matched TFT (704).

10. The method of Claim 9, wherein the uplink data packet is a PDU comprising a header portion and data portion, and wherein the data portion further comprises an Ethernet Frame header;
wherein preferably the Ethernet Frame header comprises one or more TAG Protocol Identification, in the following also referred to as TPID, fields that carries the multiple C-TAGs or S-TAGs.

11. The method of Claim 9 or 10, wherein the evaluating involves the UE finding a packet filter from the QoS rule or the TFT configuration that matches with packet filter components associated with the outmost C-TAG or S-TAG of the uplink data packet.

12. The method of any one of Claims 9 to 11, wherein the QoS rule or the TFT configuration is provided via a NAS signaling from the network; and/or
wherein the QoS rule or the TFT configuration is derived by the UE from a downlink data packet.

13. A method, comprising:
establishing a protocol data unit, in the following also referred to as PDU, session or a Packet data network, in the following also referred to as PDN, connection with a user equipment, in the following also referred to as UE, by a network entity (801);
obtaining QoS rule configuration for the PDU session or Traffic Flow Template, in the following also referred to as TFT, configuration for the PDN connection, wherein the QoS rule configuration or the TFT configuration comprises a number of packet filters having packet filter components (802) ;
evaluating a header of a downlink data packet that carries multiple C-TAGs or S-TAGs, wherein the network entity evaluates an outmost C-TAG or S-TAG of the downlink data packet based on the QoS rule or the TFT configuration (803); and
transmitting the downlink data packet to the UE using a matched QoS rule or a matched TFT (804).

14. The method of Claim 13, wherein the downlink data packet is a PDU comprising a header portion and data portion, and wherein the data portion further comprises an Ethernet Frame header;
wherein preferably the Ethernet Frame header comprises one or more TAG Protocol Identification, in the following also referred to as TPID, fields that carries the multiple C-TAGs or S-TAGs.

15. The method of Claim 13 or 14, wherein the evaluating involves the network entity finding a packet filter from the QoS rule or the TFT configuration that matches with packet filter components associated with the outmost C-TAG or S-TAG of the downlink data packet.
